(19) Europäisches Patentamt
European Patent Office
Office européen des brevets

(11) **EP 2 354 509 B1**

(12) **EUROPEAN PATENT SPECIFICATION**

(45) Date of publication and mention
of the grant of the patent:
**26.02.2020   Bulletin 2020/09**

(51) Int Cl.:
*F02D 41/38* $^{(2006.01)}$         *H02P 6/00* $^{(2016.01)}$

(21) Application number: **11151049.1**

(22) Date of filing: **14.01.2011**

(54) **Method for controlling an electrical actuator of a vehicle by means of a PWM type control**

Verfahren zur Steuerung eines elektrischen Aktuators eines Fahrzeugs mittles einer PWM Steuerung

Procédé de contrôle d'un actionneur électrique de véhicule au moyen d'un contrôle de type PWM

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **18.01.2010   IT BO20100023**

(43) Date of publication of application:
**10.08.2011   Bulletin 2011/32**

(73) Proprietor: **Magneti Marelli S.p.A.**
**Corbetta (MI) (IT)**

(72) Inventors:
• **Baccaro, Romualdo**
  **13893 Donato (IT)**
• **Peciarolo, Alessandro**
  **40100 Bologna (IT)**

(74) Representative: **Bergadano, Mirko et al**
**Studio Torta S.p.A.**
**Via Viotti, 9**
**10121 Torino (IT)**

(56) References cited:
**EP-A1- 1 819 037         JP-A- 2007 244 192**
**US-A1- 2006 130 813**

**Description**

TECHNICAL FIELD

The present invention relates to a method for controlling an electrical actuator by means of a PWM (Pulse Width Modulation) type control.

The present invention is advantageously applied for the control of an electrical actuator which is part of a high pressure fuel pump controlled to regulate the amount of fuel compressed by the high pressure fuel pump, to which explicit reference will be made in the following description without therefore loosing in generality.

PRIOR ART

In the most recent common rail type fuel feeding systems, a high control accuracy of the electrical actuator which regulates the amount of compressed fuel is required, especially in engine idling and cut-off conditions (i.e. when a zero flow from the high pressure fuel pump to the rail is required). In engine idling conditions, poor control accuracy of the electrical regulation actuators, i.e. the intake valve of the high pressure pump, immediately translates into a high percentage error of the amount of compressed fuel, thus compromising the capacity of the system to maintain itself in said idling position. In cut-off conditions, instead, the intake valve must remain partially open with a relatively low, extremely accurate opening percentage: if such an opening percentage is too large, an excessively high amount of fuel is collected in the flooding chamber of the pump causing to reach, during the step of compression, a pressure higher than the pressure present in a common rail. This condition causes a partial pumping of fuel towards the common rail, which must be avoided because the high pressure fuel pump is required to provide zero flow towards the common rail. If instead such an opening percentage is too low, an amount of fuel is present in the pumping chamber which in a step of compression is not sufficient to reach a pressure such as to avoid the onset of fuel cavitation phenomena, which may damage the high pressure pump components, in particular the pumping element valves, on the long run.

With this regard, the need for ensuring the feeding of an amount of fuel into the pumping chamber which is neither too low nor too high at the same time, in particular when the high pressure pump is required to deliver zero flow towards the common rail, makes it necessary to have a particularly accurate control of the electrical actuator which regulates the amount of compressed fuel.

Currently, the electrical actuator which regulates the amount of compressed fuel is controlled in an open loop by using, for example, a control method which contemplates: determining the objective mean current that the electrical actuator must achieve during a control period to satisfy the requested flow rate coming from the pressure control of the common rail; determining the objective duty-cycle with which to control the electrical actuator, in order to implement the objective mean current according to the control voltage and an estimate of the electrical actuator impendence; and controlling the electrical actuator during the control period by applying the control voltage by means of the objective duty-cycle. A relevant prior art document is the European publication EP 1 819 037 A1.

The above-described control method does not allow to obtain a high accuracy of the current actually achieved due to errors which are made on the estimated impedance of the electrical actuator; in particular, not only does impedance at ambient temperature vary even considerably from actuator to actuator, but the resistive component of the impedance of an electrical actuator also varies with temperature.

In order to increase the control accuracy of the electrical actuator, a closed-loop control can be used, instead of or in addition to the above-described open-loop control, which closed-loop control can correct the objective duty-cycle according to a deviation between the objective mean current and the actual mean current during the control period. Due to the variation of the applied voltage by effect of the PWM-type control, the instantaneous current value during the control period continuously varies, and thus in order to calculate the actual mean current during the control period with sufficient accuracy it would be necessary to carry out several instantaneous current value measurements during the control period. However, in order to measure a sufficiently high number of instantaneous current values in the control period, such as to allow to sample the current profile in sufficiently fine manner, a very fast and thus very costly measuring hardware device is required, which device is not available in the electronic control units currently used.

In particular, the currently used electronic control units have an acquisition hardware device which is capable of measuring one single specimen of the actuated current in each control period, which does not allow to obtain a mean current of the desired degree of accuracy.

DESCRIPTION OF THE INVENTION

It is the object of the present invention to provide a method for controlling an electrical actuator of a vehicle by means of a PWM type control, which is free from the drawbacks of the prior art, and, in particular, which is easy and cost-effective to implement and allows to take into account the real-time constraints to which the processing unit is subjected.

According to the present invention, there is provided a method for controlling an electrical actuator of a vehicle by means of a PWM-type control as disclosed in the accompanying claims.

BRIEF DESCRIPTION OF THE DRAWINGS

The present invention will now be described with reference to the appended drawings, which illustrate a non-limitative embodiment thereof, in which:

- figure 1 diagrammatically and partially illustrates in blocks an injection assembly of the common rail type comprising a high pressure fuel pump provided with an electrical actuator which is controlled to regulate the amount of fuel compressed by the high pressure fuel pump by means of the control method of the present invention;
- figure 2 is a block chart of a control logic of the electrical actuator;
- figure 3 is a graph illustrating the evolution of some quantities used in the control of the electrical actuator over time; and
- figures 4 and 5 are diagrams which illustrate the reconstruction of the current profile over time made in accordance with the control method which is the object of the present invention.

PREFERRED EMBODIMENTS OF THE INVENTION

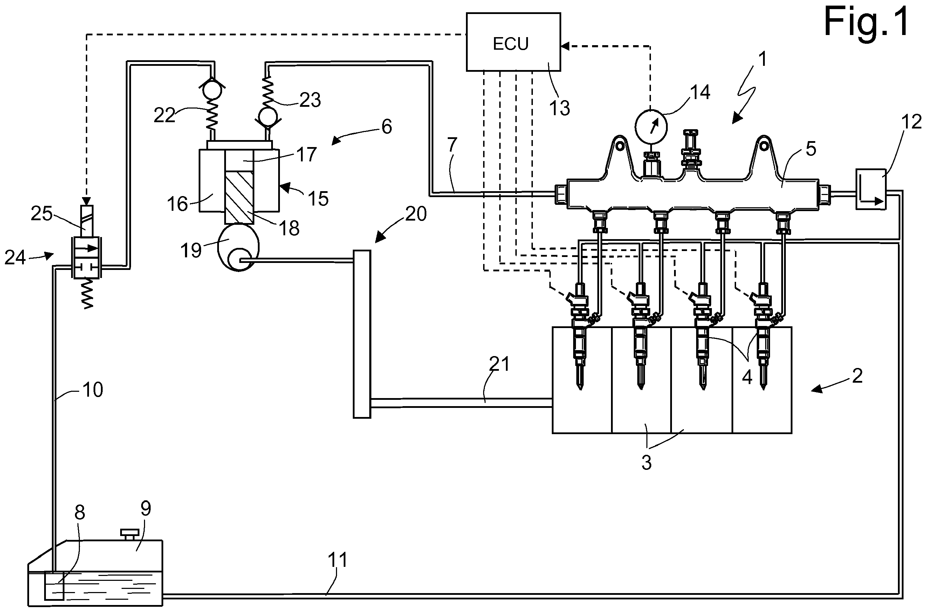

In figure 1, numeral 1 indicates as a whole an injection assembly of the common rail type for the direct injection of fuel into an internal combustion engine 2 provided with four cylinders 3.

The injection assembly 1 comprises four injectors 4, of known type, each of which is connected to a respective cylinder 3 and is adapted to inject fuel directly into the respective cylinder 3 and to receive the pressurized fuel from a common manifold 5 (named "common rail") .

Furthermore, the injection assembly 1 comprises a high pressure, variable delivery pump 6, which is adapted to feed the fuel to the common rail 5 by means of a delivery pipe 7; and a low pressure pump 8, which is arranged within a fuel tank 9 and is adapted to feed the fuel to an intake pipe 10 of the high pressure pump 6, which intake pipe 10 is provided with a fuel filter (not shown).

Furthermore, the injection assembly 1 comprises a return channel 11, which leads into the tank 9 and is adapted to receive the fuel in excess both from the injectors 4, and from a mechanical pressure limiting valve 12, which is hydraulically connected to the common rail 5. The valve 12 is calibrated to open automatically when the pressure of the fuel inside the common rail 5 exceeds a safety value to ensure the tightness and the safety of the injection assembly 1.

Each injector 4 is adapted to inject a variable amount of fuel into the respective cylinder 3 under the control of an electronic control unit 13 constituting part of the injection assembly 1. As mentioned, each injector 4 is hydraulically actuated and must receive an amount of high pressure fuel from the common rail 5 sufficient to actuate a respective needle (not shown) and to feed the respective cylinder 3 at a relatively high pressure. In order to do this, each injector 4 is fed with an amount of fuel in excess with respect to that actually injected and the excess is fed, by means of the return channel 11, to the tank 9 upstream of the low pressure pump 8.

The electronic control unit 13 is connected to a sensor 14 for measuring the fuel pressure inside the manifold 5 and feedback controls the delivery of the high pressure pump 6 so as to maintain the pressure of the fuel inside the common rail 5 equal to a desired value generally variable over time according to the crank point.

The high pressure pump 6 comprises three pumping elements 15 (only two of which are shown in figure 1), which are arranged radially at a relative angular distance of 120°, constituted by three cylinders which draw fuel from the flooding chamber 17 of the high pressure pump 6 in which a mobile piston 18 runs in reciprocating motion under the bias of a cam 19 actuated by a mechanical transmission 20, which receives motion from a drive shaft 21 of the internal combustion engine 2. Each pumping element 15 is provided with an intake valve 22, communicating with the flooding chamber 17 of the high pressure pump 6, and with a corresponding delivery valve 23 in communication with the delivery pipe 7.

Along the intake pipe 9 is arranged a flow regulating valve 24 which is functionally coupled to the intake valves 22 of the pumping elements 15 and has an electromagnetic actuation, i.e. consists of a coil which, if crossed by current, generates a magnetic field capable of actuating an actuator, the movement of which, with respect to the seat in which it is accommodated, opens and closes the inlet holes of the flow regulating valve 24. The flow regulating valve 24 is controlled by the electronic control unit 13 and is of the proportional type with in-current characteristic; in other words, the flow regulating valve 24 may achieve different opening percentages with respect to its all open section in directly proportional manner to the current which is applied thereto.

The flow rate of the high pressure pump 6 is controlled only by using flow regulating valve 24 which is controlled in choppered manner by the electronic control unit 13 according to the fuel pressure $P_{rail}$ in the common rail 5. In particular, the electronic control unit 13 determines instant-by-instant the desired value of the fuel pressure $P_{rail}$ in the common rail 5 according to the engine point and consequently adjusts the instantaneous fuel flow rate fed by the high-pressure pump 6 to the common rail 5 so as to follow the desired value of the fuel pressure $P_{rail}$ in the common rail 5 itself.

In order to adjust the instantaneous fuel flow rate fed by the high-pressure pump 6 to the common rail 5, the electronic control unit 13 regulates the instantaneous flow rate taken in by the high pressure pump 6 through the flow regulating valve 24 by varying the duty-cycle of the control voltage generated by the flow regulating valve 24 generated in PWM mode.

As known, the PWM type control voltage is a periodic voltage signal on which the duty-cycle, i.e. the ratio between the time duration during the flow regulating valve 24 is controlled at a reference voltage level, typically battery voltage (On time) and the time during which the flow regulating valve 24 is not controlled and consequently the voltage at its terminals is zero (Off time), is regulated in each period thereof.

In other words, the electronic control unit 13 cyclically controls the on times and the off times within each period of the PWM voltage signal with which the flow regulating valve 24 is controlled so that the mean current of the period which results from this voltage profile achieves the magnetic actuation needed to actuate the opening choking value of the passage of the flow regulating valve 24 required to satisfy the objective flow value at the intake of the high pressure pump 6.

The period of the PWM generated control voltage must be sufficiently small with respect to the actuator dynamics, i.e. in the case in hand the flow regulating valve 24, so as to allow the actuator to be sensitive to the mean current valve of each single period and not to the on times (active control times in the period) and to the off times (zero control period over the period).

In this manner, by continuously varying the mean current value over the period with an appropriate duty-cycle value definition, any opening percentage value of the passage section of the flow regulating valve 24 comprised between its complete closing and its complete opening is proportionally obtained.

As a consequence of the achieved opening percentage, any flow value comprised between the zero value and a maximum value can be determined with a linear relationship according to the mean current over the PWM period.

Therefore, the amount of fuel compressed by the high pressure pump 6 is continuously regulated by controlling the electrical actuator 25. It is important to note that the electrical actuator 25 is current controlled, i.e. the position of the magnetic keeper (and thus of the shutter) depends directly on the intensity of the current which circulates through the electromagnet.

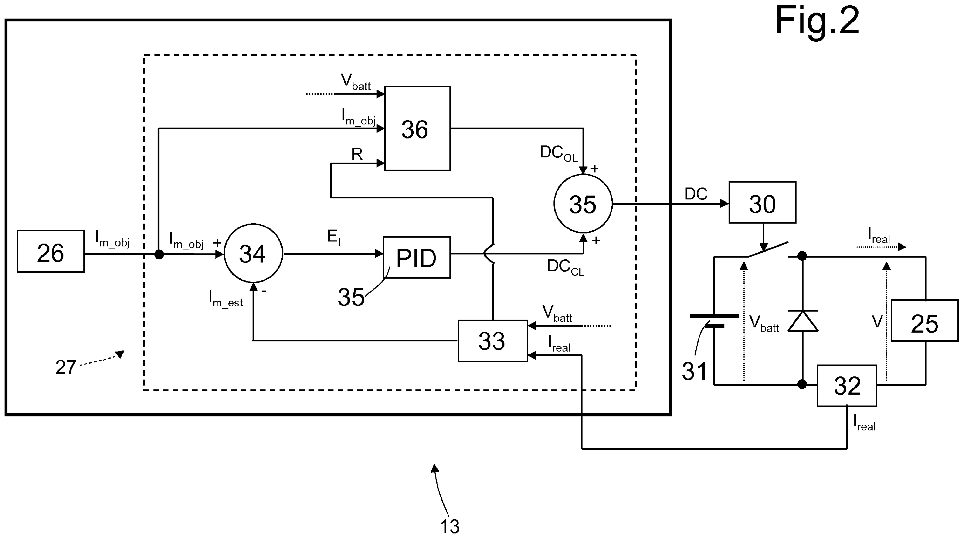

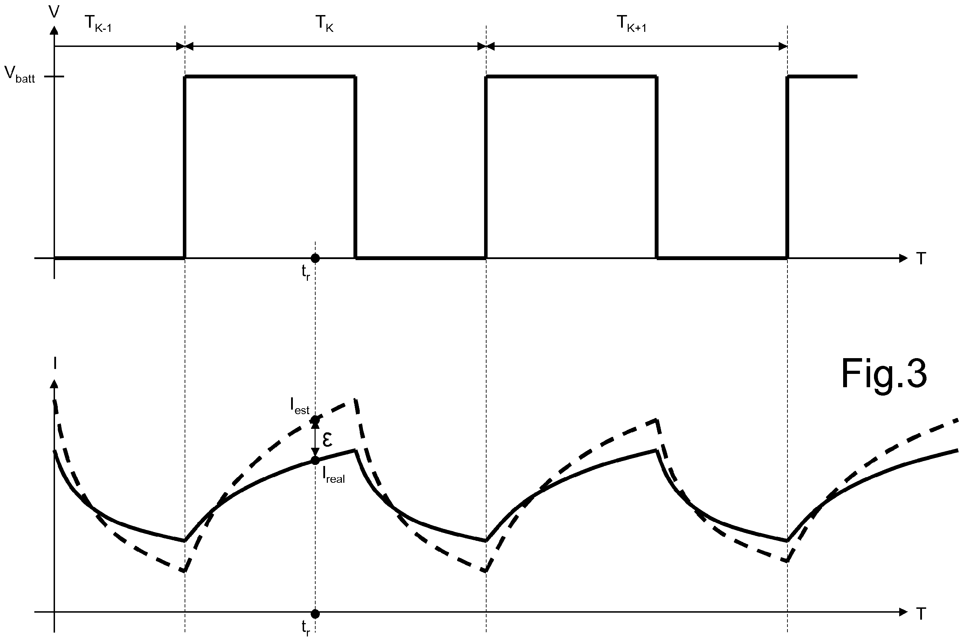

The control method which is used for controlling the electrical actuator 25 with reference to the block chart shown in figure 2 and the diagram illustrated in figure 3 is illustrated below.

As shown in figure 3, the control voltage is a periodical signal in which the periods Tk of the waveform are not necessarily of the same duration (typically are made to vary slightly with engine rpm). For each control period $T_k$, a calculation block 26 (illustrated in figure 2) determines an objective mean current $I_{m\_obj}$ that the electrical actuator 25 must actuate during each control period $T_k$; the objective mean current $I_{m\_obj}$ is determined in known manner according to the desired position of the flow regulating valve 24, thus according to the amount of fuel which must be fed and thus compressed by the high pressure pump 6.

The objective mean current $I_{m\_obj}$ is supplied to a calculation block 27 which, according to methods which will be described in greater detail below, determine the objective duty-cycle DC that allows to feed the objective mean current $I_{m\_obj}$ to the electrical actuator. The objective duty-cycle DC is used to control an electronic switch 30 which is adapted to connect the electrical actuator 25 to an electrical generator 31 (normally constituted by a vehicle battery) which has a constant control voltage $V_{batt}$ at its terminals. In other words, the electrical actuator 25 is controlled during the control period $T_k$ by applying the control voltage $V_{batt}$ for a time defined by the objective duty-cycle DC.

As shown in figure 3, in the part of a control period $T_k$ in which the objective duty-cycle DC contemplates the presence of voltage, the voltage V at the terminals of the electrical actuator 25 is equal to the control voltage $V_{batt}$ and thus the current $I_{real}$ which circulates through the electrical actuator 25 increases (with an exponential law, being an electrical circuit of the electrical actuator 25 of ohmic-inductive type); instead, in part of the control period $T_k$ in which the objective duty-cycle DC contemplates the absence of voltage, the voltage V at the terminals of the electrical actuator 25 is zero and thus the current $I_{real}$ which circulates through the electrical actuator 25 decreases (with an exponential law, being the electrical circuit of the electrical actuator 25 of the ohmic-inductive type).

A current sensor measures the actual value $I_{real}$ of the current fed to the electrical actuator 25 in a precise instant $t_r$ within the control period $T_k$ itself for each control period $T_k$. Furthermore, at each control period $T_k$ a calculation block 33 estimates the profile of the current fed to the electrical actuator 25 which solves the state equation of the electrical current state (of ohmic-inductive type) of the electrical actuator 25 by means of a numeric analysis method (e.g. by means of a fourth order Runge-Kutta numeric analysis method) to be able to reconstruct such a profile according to $V_{batt}$, of the duty cycle and of the period controlled in the current period and of the electrical parameter values updated in the period Tk. Such a situation is clearly illustrated in figure 3, wherein the solid line illustrates the actual progress of the current fed to the electrical actuator 25 (thus the instantaneous real value $I_{real}$ of the current belonging to this real progress is measured in the measure instant $t_r$) and the dashed line shows the estimate of the progress of the current fed to the electrical actuator 25 according to the electrical parameter values being identified, updated to the period $T_k$.

The estimated current profile inevitably has a given deviation with respect to the real progress until the identification method of such parameters, designed to work in pair with the estimation method which reconstructs the current curve, converges on the real values thereof.

The state equation of the electrical circuit of the electrical actuator 25 is a differential, first order equation, known in literature and equivalent to an electrical ohmic-inductive circuit; in particular, the state equation of the electrical circuit of the electrical actuator 25 is the following:

$$\mathtt{di/dt \; = \; - \; R/L \; * \; i \; + \; V/L}$$

The numeric analysis method chosen to estimate the progress of the current fed to the electrical actuator 25 must be such to guarantee good result stability, i.e. must not be characterized by an essentially high cut-off error, and must be such to guarantee efficiency, i.e. to have a low computing cost for the electrical control unit 13 which must implement it. For this reason, it is apparent that a good trade-off may be guaranteed by a fourth order Runge-Kutta numeric analysis method, which is an interactive method provided with good curve reconstruction accuracy, widely used in the numeric approximation of differential equation solutions and, by virtue of its recursive expression, such to be used within a standard control unit process, i.e. a process which is slower than that which would be needed to actually sample the current curve.

The recursivity of such a method allows to calculate a current value on the curve at a given discreet instant $t_i$ according to the current value, which on the curve is in the discreet instant preceding $t_{i-1}$, where:

$$\mathtt{h \; = \; t_i - t_{i-1}}$$

is the integration step chosen for reconstructing the curve h = $T_{PWM}/N_{step}$. In this manner, the possibility is guaranteed of calculating all the discreet current points which reconstruct the current profile in number equal to number of integration steps $N_{step}$ chosen for reconstructing the curve within a cycle run within a single control unit process (number of which points is chosen according to the trade-off between the need for curve sampling fineness and the need to avoid excessive burden on the calculating resources of the processor).

At the end of the cycle which implements the numeric estimation method of the current curve (e.g. the aforesaid Runge-Kutta method) a vector of $N_{step}$ elements is obtained, within the same control unit process, which vector contains the discreet set of instantaneous current values which correspond to the estimated current profile sampling. Not availing of this discreet set of values whenever a standard control unit process is run, much faster processes or routines both created ad hoc and very demanding from the point of view of computing load of the microprocessor should be used to reconstruct the current profile.

It is worth noting at this point that the aforesaid numeric method (Runge-Kutta method) is an open-loop estimation method, i.e. a method which reconstructs the entire current curve based only on PWM mode control voltage values known a priori and on the electrical parameters updated to the k-th step.

Because a current value read at a given percentage of $T_{on}$ is available in each control period and because such a value is altered, as mentioned above, by the coupling on the signal of a noise which derives from the thermal agitation in the valve coil, it is possible to use such a current datum, with Kalman type approach, both for correcting the estimated current curve obtained in open-loop by means of a numeric integration method, which is, for example, the aforesaid Runge-Kutta method, with an estimation term depending on the current measurement (Kalman K(t) gain) and for filtering noise from the current datum which is inevitably coupled to it.

Approach to the estimation problem according to Kalman contemplates the use of all prior information which are available to the system useful to obtain an estimation a priori of the quantity intended to be estimated (i.e. period, control duty and electrical parameter estimate updated to step $T_k$) and thus to correct such an a priori estimation in appropriate manner according to the data which are subsequently made available by the measurements carried out on the variables of the system itself.

The advantage offered by the use of current measurements (which coincide with the state variable in the Kalman state representation of the R-L circuit of the flow regulating valve 24) which are gradually made available to construct the estimator derives from the fact that by being able to use data corresponding to the quantity to be estimated to correct the open-loop estimate, an adequately high accuracy can be obtained in the estimated current profile also by using a much less accurate a priori estimation method, such as for example a numeric Eulero integration method, instead of the more demanding Runge-Kutta method.

In order to use the Kalman approach to the estimation problem, an ISU (input-state-output) representation must be given to the system, i.e. the dynamic behavior of the system must be represented by an equation of the following type:

$$di/dt = a*i(t) + b*V(t)$$

$$y(t) = h_u*i(t)$$

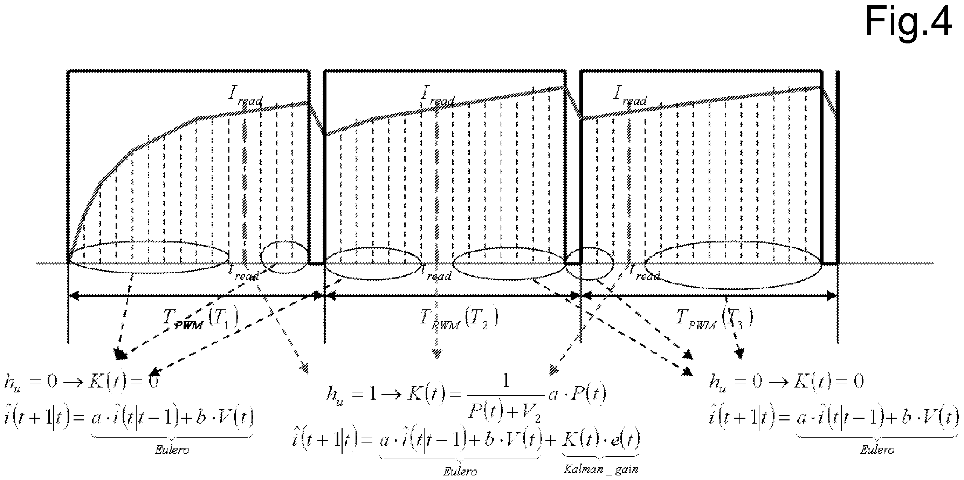

Obviously, availing the reading of the current reading in only one point of the curve to be estimated for each PWM period, the value of the output parameter of the equation shown above ($h_u$) is 1 only in the step of integration in which the current reading is available, while it remains 0 in all other points, making the Kalman gain K(t) also zero in all these points. Consequently, in all the points of the curve except for the one in which the measurement is available, the Kalman gain is zero and the estimate is only carried out in open-loop with the chosen numeric integration method, as shown in diagram in figure 4, where a simple Eulero numeric method has been chosen for the open-loop estimation part.

In order to estimate the current progress fed to the electrical actuator 25 during the control period $T_k$, the calculation block 33 must consider both the voltage control value $V_{batt}$ (measurement which is available because it is normally detected onboard of a vehicle) and an estimate of the impedance Z (i.e. of the resistance R and of the inductance L) of the electrical circuit (of ohmic-inductive type) of the electrical actuator 25. The estimated impedance Z is obtained by using an identification algorithm which works in pair with the estimation method of the current curve.

At the beginning of the control, the calculation block 33 assumes the estimated impudence Z equal to an initial value determined during a step of design or alternatively to a value self-learned beforehand by the same calculation block 33 and thus stored in a specific memory cell. Proceeding with the control, the identification algorithm which is located in the calculation block 33 constantly refines, i.e. improves, the estimate of the impedance Z of the electrical actuator 25 in subsequent steps. In other words, the estimate of the impedance Z of the electrical actuator 25 is varied at each control period $T_k$ to attempt to converge towards the real value. It is important to note that the real value of the impedance Z of the electrical actuator 25 is not constant, but instead varies with temperature because the resistive component R of impedance Z increases as the temperature of the electrical actuator 25 increases; consequently, the identification algorithm contained in the calculation block 33 must be such that the estimate of the impedance Z of the electrical actuator 25 follows the real value of the impendence Z, i.e. must be an adaptive identification algorithm.

In order to make the estimate of the impedance Z of the electrical actuator 25 converge towards the real value of the impedance Z, the calculation block 33 compares the real value $I_{real}$ of the current fed to the electrical actuator 25 in the measure instant $t_r$, which is measured as mentioned above by the current sensor 32, with the estimated current value $I_{est}$ fed to the electrical actuator 25 in the same measure instant $t_r$ in which the actual value $I_{real}$ was measured.

The estimated value $I_{est}$ of the current is easily obtained by selecting from the vector $N_{step}$ elements which result from the numeric estimated method of the current curve by points the punctual current value related to the measure instant $t_r$. For each control period $T_k$ it is possible to calculate a deviation $\varepsilon$ by means of the following equation:

$$\varepsilon = I_{real} - I_{est}$$

$I_{est}$ estimated current value of the electrical actuator 25 in measure instant $t_r$;
$I_{real}$ actual current value of the electrical actuator 25 in measure instant $t_r$.

The standard deviation $\varepsilon^2$ of the deviation $\varepsilon$ in the control period $T_k$ is given by the following equation:

$$\varepsilon^2 = (I_{real} - I_{est})^2$$

It is apparent that the standard deviation $\varepsilon^2$ of the deviation $\varepsilon$ must be minimized with respect to the electrical parameters to be identified in order to find the real values of such parameters, and thus so that for each control period $T_k$ the estimated current values $I_{est}$ of the current fed to the electrical actuator 25 according to such parameters are as close as possible to the real current values $I_{real}$. The calculation block 33 updates the estimated impedance Z of the electrical actuator 25 seeking the value of the impedance Z which minimizes the standard deviation $\varepsilon^2$ of the deviation $\varepsilon$; in particular, according to a preferred embodiment, the calculation block 33 uses an optimization method which, in this case, coincides with a minimization method of the standard deviation $\varepsilon^2$ (taken as cost functional), known in literature as "Steepest Descent". The "Steepest Descent" optimization method is adaptive and repeated at each control period $T_k$ to be able to recursively update the estimated of the impedance Z.

It contemplates moving, for each calculation step in the direction of steepest negative descent, i.e. in the direction in which the cost functional (standard deviation $\varepsilon^2$) grows more rapidly with respect to the parameters to be identified until the minimum global point of the cost functional is reached, point in which if the parameters to be identified as time-invariant, the method would cease updating, having reached convergence. The direction of steepest descent at a given calculation point is the direction of the gradient of the functional with respect to the electrical parameters to be identified in the point constituted by the values that the parameters being identified have in the given calculation step. Starting from the point in which the parameters to be identified have in the current calculation step and following the movement indicated by the gradient in that point, the method reaches a point which represents the update to the next step of the values of such parameters, being such parameters closer to their real values because they are such to minimize the standard deviation of the current estimate with respect to its measurement. The gradient is recalculated in the next control period $T_k$ and the process is repeated.

For each control period $T_k$ it is possible to update the estimated impedance Z of the electrical actuator, and in particular of its resistive components R by means of the optimization method applied to standard deviation $\varepsilon^2$ of the deviation $\varepsilon$. At the period $T_{k+1}$ subsequent to the control period $T_k$, obviously the method will start from estimating the impedance Z of the electrical actuator 25 calculated in the control period $T_k$; consequently, the estimate of the impedance Z of the electrical actuator 25 in control period $T_{k+1}$ is potentially is better (i.e. more accurate) than the impedance Z of the previous control period $T_k$, and thus the estimated progress of the current fed to the electrical actuator 25 according to the updated value of the impedance Z is also better (i.e. more accurate) in the control period $T_{k+1}$ than the estimated progress of the current fed to the electrical actuator 25 in the previous control period $T_k$.

Knowing the estimated progress of the current fed to the electrical actuator 25 during the control period $T_k$, the calculation block 33 determines the mean estimated current $I_{m\_est}$ during the control period $T_k$ with a simple arithmetic mean operation of the instantaneous current values $N_{step}$ which reconstruct the estimated current profile on the control period Tk. Such an estimated mean current $I_{m\_est}$ during the control period $T_k$ is used as feedback in a closed-loop control to determine a closed-loop contribution $DC_{CL}$ of the objective duty-cycle DC. In particular, in a comparison block 34 a current error $E_I$ during the control period $T_k$ is calculated by calculating the difference between the objective mean current $I_{m\_obj}$ and the estimated mean current $I_{m\_est}$ during the control period $T_k$; thus the current error $E_I$ is supplied to a PID controller 35 which in known manner determines a closed-loop contribution $DC_{CL}$ of the objective duty-cycle DC attempting to cancel out the current error $E_I$.

According to a possible embodiment, in addition to the closed loop contribution $DC_{CL}$ an open-loop contribution $DC_{OL}$ is also calculated which is added to the closed-loop contribution $DC_{CL}$ in a summing block 35 for determining the objective duty-cycle DC. The function of the open-loop contribution $DC_{CL}$ is of increasing the promptness and response rapidity of the control. The open-loop contribution $DC_{CL}$ is determined by a calculation block 36 according to the objective mean current $I_{m\_obj}$, of the resistive component R of the impedance Z of the electrical actuator 25, and of the value of the control voltage $V_{batt}$. A mathematical model of the electrical actuator 25 may be implemented in calculation block 36, which model either calculates the open-loop contribution $DC_{OL}$ by means of equations or may be stored in an experimental map which directly provides the open-loop contribution $DC_{OL}$.

The control method described above allows to control the electrical actuator 25 in extremely accurate manner, because it allows to determine (after a limited number of cycles, i.e. limited number of control periods $T_k$) a very accurate estimate of the impedance Z of the electrical circuit of the electrical actuator 25.

The algorithm which is implemented for estimating the current profile and the algorithm for identifying the electrical parameters from which the current is estimated is a function with the purpose of obtaining in a series of subsequent calculation steps values which increasingly better estimate the real value of the impedance Z and the real value of the mean estimated current $I_{m\_est}$ during the control period $T_k$.

Firstly, a given discretization of the continuous system to be identified, i.e. of the equivalent R-L circuit of the valve, is used:

$$\begin{cases} \dfrac{di}{dt}(t) = -\dfrac{R}{L} \cdot i(t) + \dfrac{1}{L} \cdot V(t) \\ y(t) = i(t) \end{cases}$$

taking as discreet step for sampling the input signal (i.e. the voltage applied to the valve) and the state/output signal (i.e. the current flowing in flow regulating valve 24) of the system, $h=T_{PWM}/N_{step}$ in which $N_{step}$ is the number of steps into which it is chosen to divide the time domain of the equation represented by $T_{PWM}$, i.e. the period of the PWM voltage signal applied to the valve coil.

If the system is discretized with Eulero:

$$\begin{cases} i(t+1) = a_{disc\_Eu} \cdot i(t) + b_{disc\_Eu} \cdot V(t) \\ y(t) = i(t) \end{cases}$$

with

$$\begin{cases} a_{disc\_Eu} = 1 - \dfrac{R}{L} \cdot h \\ b_{disc\_Eu} = \dfrac{h}{L} \end{cases}$$

thus:

$$\begin{cases} L = \dfrac{h}{b_{disc\_Eu}} \\ R = \dfrac{\left(1 - a_{disc\_Eu}\right)}{b_{disc\_Eu}} \end{cases}$$

If the system is discretized with Runge-Kutta:

$$\begin{cases} i(t+h) = \underbrace{\left(1 + h \cdot \sum_{n=1}^{4} \dfrac{1}{n!} a_{cont}^{n}\right)}_{a_{disc\_R.K.}} \cdot i(t) + \underbrace{h \cdot b_{cont}\left(\sum_{n=1}^{4} \dfrac{1}{n!} a_{cont}^{n-1}\right)}_{b_{disc\_R.K.}} \cdot V(t) \\ y(t) = i(t) \end{cases}$$

with

$$a_{disc\_R.K} = 1 + h \cdot \sum_{n=1}^{4} \dfrac{1}{n!} a_{cont}^{n}$$

$$b_{disc\_R.K} = h \cdot b_{cont}\left(\sum_{n=1}^{4} \dfrac{1}{n!} a_{cont}^{n-1}\right)$$

thus:

$$\begin{cases} R = -\dfrac{a_{cont}}{b_{cont}} \\ L = \dfrac{1}{b_{cont}} \end{cases}$$

Secondly, the current curve in the PWM period is reconstructed according to the electrical parameters updated to step $T_k$, according to the period and duty values which are controlled in the current period and according to the battery voltage value, using a given numeric method to reconstruct the curve which consists of an open-loop estimate system (i.e. a reconstruction method of the current curve based only on the a priori knowledge of the system and on the knowledge of the PWM voltage stimulus signal). Additionally, a part constituted by the Kalman gain of such a predictor is contemplated in the point of the curve in which the measured current datum is available and in which it is possible to define such a gain, i.e. a term which has the task of correcting the open-loop estimate starting from information that the measured current datum may contribute to the estimate. The use of a Kalman gain for taking into account the information made to the measurement in forming the estimate allows to use a numeric integration method of the state equation in the open-loop part of the estimate which is less accurate and thus less demanding from the computing point of view in all cases reaching a sufficiently high accuracy.

In particular, the results are not satisfactory if the reconstruction of the current curve is made using only the Eulero method without Kalman gain, thus the Kalman gain must also additionally be used if Eulero is used for the estimating part of the open-loop curve.

If the Runge-Kutta method only is used in the open-loop estimate of the current curve instead appreciable results are obtained also without Kalman gain except for the need to filter the identified parameters with a moving mean filter due to the absence of an adequate treatment of the noise paired with the current measurement, which using a Kalman filter guarantees instead.

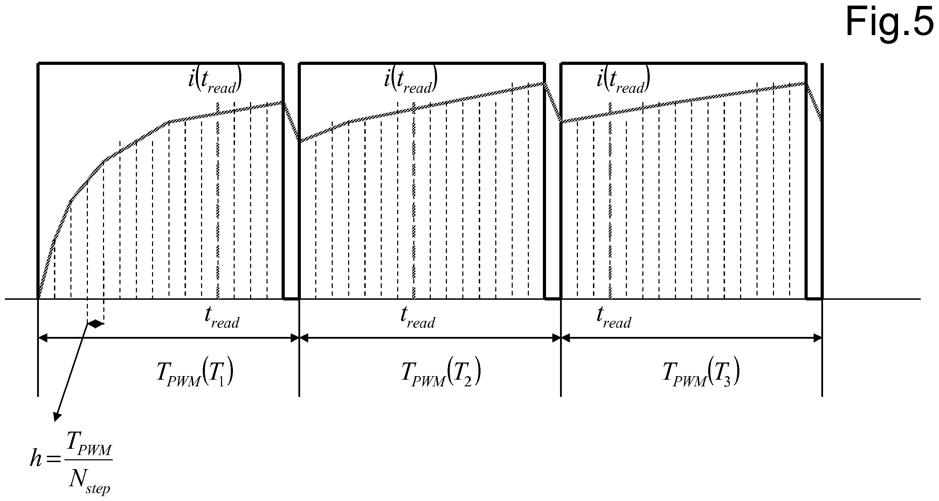

The electrical parameters are updated as shown in greater detail below in each period $T_{PWM}$, indexed by the index $T_k$ and representing the number of calculation steps carried out by the identification algorithm of the electrical parameters. According to the electrical parameters updated in step $T_k$ and to the period, duty and battery voltage parameters controlled in the $T_k$-th PWM period, the instantaneous current value related to that point of the curve is calculated in each step into which $T_{PWM}(T_k)$ is subdivided. When the reconstruction of the curve is completed there are $N_{step}$ instantaneous current values which reconstruct in points the current curve within the period $T_{PWM}(T_k)$ saved in a vector of $N_{step}$ elements, as shown in figure 5.

If the Eulero method is used, the current curve on the PWM period, $T_{PWM}$, is constructed one step at a time using $h=T_{PWM}/N_{step}$ as calculation step with $N_{step}$ value suited to the number of steps into which $T_{PWM}$ is divided to be chosen according to the required accuracy and sustainable computer burden.

In particular, in points $N_{step}$ -1 of the period $T_{PWM}(T_k)$ in which there is no current reading, i.e. $h_u=0$, where $h_u$ is the scaled output parameters of the discreet state equation of the R-L circuit:

$$\begin{cases} P_{Tk}(t+1) = a_{disc\_Eu\_Tk}^{2} \cdot P_{Tk}(t) + V_1 \\ K_{Tk}(t) = 0 \\ \hat{i}_{Tk}(t+1|t) = a_{disc\_Eu\_Tk} \cdot \hat{i}_{Tk}(t|t-1) + b_{disc\_Eu\_Tk} \cdot V_{Tk}(t) \end{cases}$$

While in the point of the period $T_{PWM}(T_k)$, instead, in which reading is available, i.e. $h_u=1$:

$$\begin{cases} P_{Tk}(t+1) = a_{disc\_Eu\_Tk}^{2} \cdot P_{Tk}(t) + v_1 - \dfrac{a_{disc\_Eu\_Tk}^{2} \cdot P_{Tk}^{2}(t)}{P_{Tk}(t) + v_2} \\ K_{Tk}(t) = \dfrac{1}{P_{Tk}(t) + v_2} \cdot a_{disc\_Eu\_Tk} \cdot P_{Tk}(t) \quad \text{If the} \\ \hat{i}_{Tk}(t+1|t) = a_{disc\_Eu\_Tk} \cdot \hat{i}_{Tk}(t|t-1) + b_{disc\_Eu\_Tk} \cdot V_{Tk}(t) + K_{Tk}(t) \cdot e_{Tk}(t) \end{cases}$$

If Runge-Kutta method is used, the current curve on the PWM period, $T_{PWM}$, is reconstructed step by step using $h=T_{PWM}/N_{step}$ as calculation step.

In particular, in points $(N_{step}-1)$ of the period $T_{PWM}(T_k)$ in which there is no current reading:

$$\left\{ \begin{array}{l} P_{Tk}(t+1) = \underbrace{\left(1 + h \cdot \sum_{n=1}^{4} \frac{1}{n!} a_{cont\_Tk}^{n}\right)^{2}}_{a_{disc\_R.K\_Tk.}} \cdot P_{Tk}(t) + v_{1} \\[2em] K_{Tk}(t) = 0 \\[1em] \hat{i}_{Tk}(t+1|t) = \underbrace{\left(1 + h \cdot \sum_{n=1}^{4} \frac{1}{n!} a_{cont\_Tk}^{n}\right)}_{a_{disc\_R.K\_Tk.}} \hat{i}_{Tk}(t|t-1) + \underbrace{h \cdot b_{cont\_Tk} \cdot \left(\sum_{n=1}^{4} \frac{1}{n!} a_{cont\_Tk}^{n-1}\right)}_{b_{disc\_R.K.\_Tk}} \cdot V_{Tk}(t) \end{array} \right.$$

While in the point of the period $T_{PWM}(T_k)$, instead, in which reading is available:

$$\left\{ \begin{array}{l} P_{Tk}(t+1) = \underbrace{\left(1 + h \cdot \sum_{n=1}^{4} \frac{1}{n!} a_{cont\_Tk}^{n}\right)^{2}}_{a_{disc\_R.K\_Tk.}} \cdot P_{Tk}(t) + v_{1} - \dfrac{\overbrace{\left(1 + h \cdot \sum_{n=1}^{4} \frac{1}{n!} a_{cont\_Tk}^{n}\right)^{2}}^{a_{disc\_R.K\_Tk.}} \cdot P_{Tk}^{2}(t)}{P_{Tk} + v_{2}} \\[3em] K_{Tk}(t) = \frac{1}{P_{Tk}(t) + v_{2}} \underbrace{\left(1 + h \cdot \sum_{n=1}^{4} \frac{1}{n!} a_{cont\_Tk}^{n}\right)}_{a_{disc\_R.K\_Tk.}} \cdot P_{Tk}(t) \\[2em] \hat{i}_{Tk}(t+1|t) = \underbrace{\left(1 + h \cdot \sum_{n=1}^{4} \frac{1}{n!} a_{cont\_Tk}^{n}\right)}_{a_{disc\_R.K\_Tk.}} \hat{i}_{Tk}(t|t-1) + \underbrace{h \cdot b_{cont\_Tk} \left(\sum_{n=1}^{4} \frac{1}{n!} a_{cont\_Tk}^{n-1}\right)}_{b_{disc\_R.K.\_Tk}} \cdot V_{Tk}(t) + K_{Tk}(t) \cdot e_{Tk}(t) \end{array} \right.$$

Finally, the punctual value related to the measure instant of the single current sample which can be acquired in the period $T_{PWM}(T_k)$ underway is selected from $N_{step}$ values which reconstruct the current curve over the period $T_{PWM}(T_k)$, previously obtained, and the standard deviation is calculated according to the estimated current value with respect to the current value measured in $t_{read}$, thus obtaining the cost functional $J_{Tk}\left(t_{read}, \vec{W}_{Tk}\right) = \varepsilon_{Tk}^{2}\left(t_{read}, \vec{W}_{Tk}\right)$,

where $\varepsilon_{Tk}(t_{read}, \vec{W}_{Tk}) = i_{est}(t_{read\_Tk}, \vec{W}_{Tk}) - i_{meas}(t_{read\_Tk})$ and $\vec{W}_{Tk}$ indicates the vector of the parameters to be identified updated to step $T_k$. The value of the electric parameters of concern which minimise $J_{Tk}(t_{read}, \vec{W}_{Tk})$ coincide, except for a given error with the real value of the unknown parameters. The value of the parameters which minimise the functional $J_{Tk}(t_{read}, \vec{W}_{Tk})$ is sought by using a recursive method which solves the problem in several calculation steps, so that at each new calculation step a better identification that of the previous step is obtained until, having reached the parameter values which minimise the function, the method converges on the sought values. In order to find such a minimum value, the method starts from an initial estimate of the unknown values of concern and for each step $T_k$ calculates the gradient of $J_{Tk}(t_{read}, \vec{W}_{Tk})$ with respect to the parameters to be identified in $T_k$, obtaining in this manner the direction in which the functional descends more rapidly, starting from the parameters values in step $T_k$. A value for each parameter is obtained in step $T_{k+1}$ which more greatly approaches the real value by minimising the functional. By applying this minimum search method called "Steepest Descent" an updated value of the parameters in the subsequent calculation step is obtained, i.e. in the subsequent PWM period, i.e. $T_{PWM}(T_k+1)$.

In case of Eulero, in which dynamic and input parameters are updated:

$$a_{disc\_Tk+1} = a_{disc\_Tk} - \underbrace{2 \cdot \mu}_{=\mu} \cdot \varepsilon_{Tk}\left(t_{read}\right) \cdot \hat{i}_{Tk}\left(t_{read\_T_K} - 1 \middle| t_{read\_T_K} - 2\right)$$

and

$$b_{disc\_Tk+1} = b_{disc\_Tk} - \underbrace{2 \cdot \mu}_{=\mu} \cdot \varepsilon_{Tk}\left(t_{read}\right) \cdot V\left(t_{read\_T_K} - 1\right)$$

where

$$\varepsilon_{Tk}\left(t_{read}\right) = i_{est}\left(t_{read\_T_K}\right) - i_{meas}\left(t_{read\_T_K}\right)$$

given

$$i_{est}\left(t_{read\_T_K}\right) \equiv \hat{i}_{Tk}\left(t_{read\_T_K} \middle| t_{read\_T_K} - 1\right)$$

thus:

$$\begin{cases} L_{Tk} = \dfrac{h}{b_{disc\_Eu\_Tk}} \\ R_{Tk} = \dfrac{\left(1 - a_{disc\_Eu\_Tk}\right)}{b_{disc\_Eu\_Tk}} \end{cases}$$

In case of Eulero in which resistance and inductances are updated directly:

$$R_{Tk+1} = R_{Tk} - \underbrace{2 \cdot \mu}_{=\mu} \cdot \varepsilon_{Tk}\left(t_{read}\right) \cdot \dfrac{h}{L_{Tk}} \hat{i}_{Tk}\left(t_{read\_T_K} - 1 \middle| t_{read\_T_K} - 2\right)$$

and

$$L_{Tk+1} = L_{Tk} - \underbrace{2 \cdot \mu}_{=\mu} \cdot \varepsilon_{Tk}\left(t_{read}\right) \cdot \dfrac{\Delta\hat{i}\left(t_{read\_Tk}\right)}{L_{Tk}}$$

with

$$\Delta\hat{i}\left(t_{read\_Tk}\right) = \hat{i}_{Tk}\left(t_{read\_Tk} \middle| t_{read\_Tk} - 1\right) - \hat{i}_{Tk}\left(t_{read\_Tk} - 1 \middle| t_{read\_Tk} - 2\right)$$

where

$$\varepsilon_{Tk}\left(t_{read}\right) = i_{est}\left(t_{read\_T_K}\right) - i_{meas}\left(t_{read\_T_K}\right)$$

given

$$\hat{i}_{Tk}\left(t_{read}\right) \equiv i_{est}\left(t_{read\_T_K}\right)$$

In case of Runge-Kutta, in which dynamic and input parameters are updated:

$$a_{cont\_Tk+1} = a_{cont\_Tk} - \underbrace{2 \cdot \mu \cdot h}_{=\mu} \cdot \varepsilon_{Tk}(t_{read}) \cdot \frac{\partial \Phi_{R.K.}\left(t_{read\_T_K} - 1, \hat{i}_{Tk}\left(t_{read\_T_K} - 1\right); f\right)}{\partial a_{cont\_Tk}}$$

with

$$\frac{\partial \Phi_{R.K.}\left(t_{read} - 1, \hat{i}_{Tk}\left(t_{read} - 1\right); f\right)}{\partial a_{cont\_Tk}} =$$

$$\frac{1}{6}\left(\hat{i}_{Tk}(t_{read} - 1) + k_1(t_{read} - 1) + k_2(t_{read} - 1) + k_3(t_{read} - 1)\right) +$$

$$+ a_{cont\_Tk}\frac{1}{6}\left[\hat{i}_{Tk}(t_{read} - 1) \cdot \left(3 + a_{cont\_Tk} + \frac{1}{2}a_{cont\_Tk}^2\right) + k_1(t_{read} - 1) \cdot \left(1 + \frac{1}{2}a_{cont\_Tk}\right) + b_{cont\_Tk} \cdot V_{Tk}(t_{read} - 1)\right]$$

and

$$b_{cont\_Tk+1} = b_{cont\_Tk} - \underbrace{2 \cdot \mu \cdot h}_{=\mu} \cdot \varepsilon_{Tk}(t_{read}) \cdot \frac{\partial \Phi_{R.K.}\left(t_{read\_T_K} - 1, \hat{i}_{Tk}\left(t_{read\_T_K} - 1\right); h, f\right)}{\partial b_{cont\_Tk}}$$

with

$$\frac{\partial \Phi_{R.K.}\left(t_{read}, \hat{i}_{Tk}\left(t_{read} - 1\right); f\right)}{\partial b_{cont\_Tk}} = \sum_{n=1}^{4} \frac{1}{n!} a_{cont\_Tk}^{n-1} \cdot V_{Tk}(t_{read} - 1)$$

where

$$\varepsilon_{Tk}(t_{read}) = i_{est}\left(t_{read\_T_K}\right) - i_{meas}\left(t_{read\_T_K}\right)$$

given

$$\hat{i}_{Tk}(t_{read}) \equiv i_{est}\left(t_{read\_T_K}\right)$$

thus:

$$\begin{cases} R_{Tk} = -\dfrac{a_{cont\_Tk}}{b_{cont\_Tk}} \\ L_{Tk} = \dfrac{1}{b_{cont\_Tk}} \end{cases}$$

In case of Runge-Kutta in which resistance and inductances are updated directly:

$$R_{Tk+1} = R_{Tk} - \underbrace{2 \cdot \mu}_{=\mu} \cdot \varepsilon_{Tk}(t_{read}) \cdot \left( -\frac{1}{L_{Tk}} \right) \cdot \frac{\partial \varepsilon_{Tk}}{\partial a_{cont\_Tk}}(t_{read})$$

$$L_{Tk+1} = L_{Tk} - \underbrace{2 \cdot \mu}_{=\mu} \cdot \varepsilon_{Tk}(t_{read}) \cdot \left( \frac{R_{Tk}}{L_{Tk}^2} \cdot \frac{\partial \varepsilon_{Tk}}{\partial a_{cont\_Tk}}(t_{read}) - \frac{1}{L_{Tk}^2} \cdot \frac{\partial \varepsilon_{Tk}}{\partial b_{cont\_Tk}}(t_{read}) \right)$$

where:

$$\frac{\partial \varepsilon_{Tk}}{\partial a_{cont\_Tk}}(t_{read}) =$$

$$\frac{1}{6}\left( \hat{i}_{Tk}(t_{read}-1) + k_1(t_{read}-1) + k_2(t_{read}-1) + k_3(t_{read}-1) \right) +$$

$$+ a_{cont\_Tk} \frac{1}{6}\left[ \hat{i}_{Tk}(t_{read}-1) \cdot \left( 3 + a_{cont\_Tk} + \frac{1}{2}a_{cont\_Tk}^2 \right) + k_1(t_{read}-1) \cdot \left( 1 + \frac{1}{2}a_{cont\_Tk} \right) + b_{cont\_Tk} \cdot V_{Tk}(t_{read}-1) \right]$$

and

$$\frac{\partial \varepsilon_{Tk}}{\partial b_{cont\_Tk}}(t_{read}) = \sum_{n=1}^{4} \frac{1}{n!} a_{cont\_Tk}^{n-1} \cdot V_{Tk}(t_{read}-1)$$

At the same time as the selection of the value of the current curve reconstructed by points to be compared with the current datum read for calculating $\varepsilon_{Tk}(t_{read},\overrightarrow{W}_{Tk})=i_{est}(t_{read\_TK},\overrightarrow{W}_{Tk})-i_{meas}(t_{read\_Tk})$, the $N_{step}$ punctual current values with which the curve is constructed are mediated on the period with an arithmetic mean (sum of $N_{step}$ values of the estimated curve divided by $N_{step}$) to obtain the estimated mean current value to be used as feedback in the control for each PWM period.

When the update of the electrical parameters with the recursive calculation reaches convergence, the reconstructed current profile is sufficiently close to the real current profile and the mean value estimate is adequately accurate.

The control method described above allows to control the electrical actuator 25 in extremely accurate manner, because it allows to determine (after a limited number of cycles, i.e. limited number of control periods $T_k$) a very accurate estimate of the impendence Z of the electrical circuit of the electrical actuator 25.

## Claims

1. Method for controlling an electrical actuator (25) of a vehicle by means of a PWM type control; the method comprises the steps of:

determining an objective mean current ($I_{m\_obj}$) to be fed to the electrical actuator (25) during a control period ($T_k$); determining an objective duty-cycle (DC) which, during the control period ($T_k$), allows the objective mean current ($I_{m\_obj}$) to be fed to the electrical actuator (25) according to a control voltage ($V_{batt}$) and to an estimation of the impedance (Z) of the electrical actuator (25); controlling, during the control period ($T_k$), the electrical actuator by (25) applying the control voltage ($V_{batt}$) through the objective duty-cycle (DC); and measuring the actual value ($I_{real}$) of the current fed to the electrical actuator (25) at a precise measure instant ($t_r$) determined within the control period ($T_k$) for each control period ($T_k$) by means of a current sensor; the control method is **characterized in that** it comprises the further steps of:

determining, at the same measure instant ($t_r$) at which the actual value ($I_{real}$) has been measured, an

estimated value ($I_{est}$) of the current fed to the electrical actuator (25) according to the control voltage ($V_{batt}$), the objective duty-cycle (DC) and the estimation of the impedance (Z) of the electrical actuator (25); wherein the estimated value ($I_{est}$) of the current fed to the electrical actuator (25) is obtained by selecting from a vector comprising a plurality ($N_{step}$) of elements which result from an estimation of the progress of the current fed to the electrical actuator (25) during the control period ($T_k$) by means of a numerical analysis method applied to an equation of state of the electrical circuit of the electrical actuator (25); and calculating a deviation ($\varepsilon$) between the actual value ($I_{real}$) and the estimated value ($I_{est}$) of the current fed to the electrical actuator (25) at the measure instant ($t_r$); and updating the estimation of the impedance (Z) of the electrical actuator (25) according to the deviation ($\varepsilon$) between the actual value ($I_{real}$) and the estimated value ($I_{est}$) of the current fed to the electrical actuator (25) at the measure instant ($t_r$).

2. Control method according to claim 1, wherein the method used to estimate the current profile is a numerical method of integration of the curve, in particular the fourth-order Runge-Kutta method.

3. Control method according to claim 2, wherein the current profile is corrected with a term represented by the Kalman gain.

4. Control method according to one of the previous claims and comprising the further steps of:

determining an estimated mean current ($I_{m\_est}$) during the control period ($T_k$) according to the estimation of the progress of the current fed to the electrical actuator (25) during the control period ($T_k$); and using the estimated mean current ($I_{m\_est}$) during the control period ($T_k$) as feedback in a closed-loop control.

5. Control method according to claim 4 and comprising the further steps of:

determining a current error ($E_I$) during the control period ($T_k$) by calculating the deviation between the objective mean current ($I_{m\_obj}$) and the estimated mean current ($I_{m\_est}$) during the control period ($T_k$); and determining a closed-loop contribution ($DC_{CL}$) of the objective duty-cycle (DC) according to the current error ($E_I$) .

6. Control method according to claim 5 and comprising the further steps of:

determining an open-loop contribution ($DC_{OL}$) of the objective duty-cycle (DC) according to the objective mean current ($I_{m\_obj}$) and to the estimation of the resistive component of the impedance (Z) of the electrical actuator (25) ; determining the objective duty-cycle (DC) by adding the closed-loop contribution ($DC_{CL}$) to the open-loop contribution ($DC_{OL}$).

7. Control method according to one of the previous claims, and comprising the further steps of:

calculating the standard deviation ($\varepsilon^2$) of the deviation ($\varepsilon$) between the actual value ($I_{real}$) and the estimated value ($I_{est}$) of the current fed to the electrical actuator (25) at the measure instant ($t_r$); and updating the estimation of the impedance (Z) of the electrical actuator (25) according to the standard deviation ($\varepsilon^2$) of the deviation ($\varepsilon$).

8. Control method according to claim 7, and comprising the further step of updating the estimation of the impedance (Z) of the electrical actuator (25) by means of an optimization method of the type "Steepest Descent" applied to the standard deviation ($\varepsilon^2$) of the deviation ($\varepsilon$).

9. Control method according to claim 8, wherein the optimization method uses an observer consisting of a main term for the estimation of the current curve within the control period ($T_k$), which is obtained by means of a numerical method of integration of the equation of state of the electrical circuit of the electrical actuator (25).

10. Control method according to claim 9, wherein the observer consists, furthermore, of a term for a posteriori estimation (Kalman gain) depending on the current data item available in the control period ($T_k$) to correct the estimated curve by means of the integration method.

11. Control method according to one of the previous claims and comprising the further step of determining, in a preliminary setting-up and design phase, an initial value of the estimation of the impedance (Z) of the electrical actuator (25).

**12.** Control method according to one of the previous claims, wherein the electrical actuator (25) is part of a high pressure fuel pump (6) of an internal combustion engine (1) and is controlled so as to regulate the quantity of fuel compressed by the high pressure fuel pump (6).

**Patentansprüche**

**1.** Verfahren zum Steuern eines elektrischen Aktuators (25) eines Fahrzeugs mittels einer PWM-Steuerung, welches Verfahren die Schritte enthält:

Ermitteln eines mittleren Zielstroms ($I_{m\_obj}$), der während einer Steuerperiode ($T_k$) dem elektrischen Aktuator (25) zuzuführen ist;
Ermitteln einer Ziel-Einschaltdauer (DC), die während der Steuerperiode ($T_k$) das Zuführen des mittleren Zielstroms ($I_{m\_obj}$) zu dem elektrischen Aktuator (25) gemäß einer Steuerspannung ($V_{batt}$) und einer Schätzung der Impedanz (Z) des elektrischen Aktuators (25) erlaubt;
Steuern des elektrischen Aktuators (25) während der Steuerperiode ($T_k$) durch Anlegen der Steuerspannung ($V_{batt}$) über die Ziel-Einschaltdauer (DC); und
Messen des tatsächlichen Werts ($I_{real}$) des dem elektrischen Aktuator (25) zugeführten Stroms in einem exakten Messmoment ($t_r$), der innerhalb der Steuerperiode ($T_k$) für jede Steuerperiode ($T_k$) ermittelt wird, mittels eines Stromsensors;
welches Steuerverfahren **dadurch gekennzeichnet ist, dass** es die weiteren Schritte enthält:

Ermitteln in demselben Messmoment ($t_r$), in welchem der tatsächliche Wert ($I_{real}$) gemessen wurde, eines Schätzwerts ($I_{est}$) des dem elektrischen Aktuator (25) zugeführten Stroms gemäß der Steuerspannung ($V_{batt}$), der Ziel-Einschaltdauer (DC) und der Schätzung der Impedanz (Z) des elektrischen Aktuators (25);
wobei der Schätzwert ($I_{est}$) des dem elektrischen Aktuator (25) zugeführten Stroms durch Auswahl aus einem Vektor erhalten wird, der eine Vielzahl ($N_{step}$) von Elementen enthält, die aus einer Schätzung des Fortschritts des dem elektrischen Aktuator (25) während der Steuerperiode ($T_k$) zugeführten Stroms mittels eines numerischen Analyseverfahrens, das an einer Zustandsgleichung der elektrischen Schaltung des elektrischen Aktuators (25) angewandt wird, resultieren; und
Berechnen einer Abweichung ($\varepsilon$) zwischen dem tatsächlichen Wert ($I_{real}$) und dem Schätzwert ($I_{est}$) des dem elektrischen Aktuator (25) in dem Messmoment ($t_r$) zugeführten Stroms; und
Aktualisieren der Schätzung der Impedanz (Z) des elektrischen Aktuators (25) gemäß der Abweichung ($\varepsilon$) zwischen dem tatsächlichen Wert ($I_{real}$) und dem Schätzwert ($I_{est}$) des dem elektrischen Aktuator (25) in dem Messmoment ($t_r$) zugeführten Stroms.

**2.** Steuerverfahren nach Anspruch 1, wobei das zum Schätzen des Stromprofils verwendete Verfahren ein numerisches Integrationsverfahren der Kurve ist, insbesondere das Runge-Kutta-Verfahren vierter Ordnung.

**3.** Steuerverfahren nach Anspruch 2, wobei das gegenwärtige Profil mit einem durch das Kalman-Gain dargestellten Term korrigiert wird.

**4.** Steuerverfahren nach einem der vorhergehenden Ansprüche und enthaltend die weiteren Schritte:

Ermitteln eines geschätzten mittleren Stroms ($I_{m\_est}$) während der Steuerperiode ($T_k$) gemäß der Schätzung des Fortschritts des dem elektrischen Aktuator (25) während der Steuerperiode ($T_k$) zugeführten Stroms; und
Verwenden des geschätzten mittleren Stroms ($I_{m\_est}$) während der Steuerperiode ($T_k$) als Rückkopplung in einer Rückkopplungsregelung.

**5.** Steuerverfahren nach Anspruch 4 und enthaltend die weiteren Schritte:

Ermitteln eines Stromfehlers ($E_I$) während der Steuerperiode ($T_k$) durch Berechnen der Abweichung zwischen dem mittleren Zielstrom ($I_{m\_obj}$) und dem geschätzten mittleren Strom ($I_{m\_est}$) während der Steuerperiode ($T_k$); und
Ermitteln eines Rückkopplungsregelungsbeitrags ($DC_{CL}$) der Ziel-Einschaltdauer (DC) gemäß dem Stromfehler ($E_I$).

**6.** Steuerverfahren nach Anspruch 5 und enthaltend die weiteren Schritte:

Ermitteln eines Steuerungsbeitrags ($DC_{OL}$)der Ziel-Einschaltdauer (DC) gemäß dem mittleren Zielstrom ($I_{m\_obj}$) und der Schätzung der spezifischen Widerstands-Komponente der Impedanz (Z) des elektrischen Aktuators (25);

Ermitteln der Ziel-Einschaltdauer (DC) durch Addieren des Rückkopplungsregelungsbeitrags ($DC_{CL}$) zu dem Steuerungsbeitrag ($DC_{OL}$).

7.  Steuerverfahren nach einem der vorhergehenden Ansprüche und enthaltend die weiteren Schritte:

    Berechnen der Standardabweichung ($\varepsilon^2$) der Abweichung ($\varepsilon$) zwischen dem tatsächlichen Wert ($I_{real}$) und dem Schätzwert ($I_{est}$) des dem elektrischen Aktuator (25) in dem Messmoment ($t_r$) zugeführten Stroms; und
    Aktualisieren der Schätzung der Impedanz (Z) des elektrischen Aktuators (25) gemäß der Standardabweichung ($\varepsilon^2$) der Abweichung ($\varepsilon$).

8.  Steuerverfahren nach Anspruch 7 und enthaltend den weiteren Schritt des Aktualisierens der Schätzung der Impedanz (Z) des elektrischen Aktuators (25) mittels eines Optimierungsverfahrens der Art "steilster Abstieg", das auf die Standardabweichung ($\varepsilon^2$) der Abweichung ($\varepsilon$) angewandt wird.

9.  Steuerverfahren nach Anspruch 8, wobei das Optimierungsverfahren einen Observer verwendet, der aus einem Haupt-Term zur Schätzung der gegenwärtigen Kurve innerhalb der Steuerperiode ($T_k$) besteht, welcher mittels eines numerischen Verfahrens zur Integration der Zustandsgleichung der elektrischen Schaltung des elektrischen Aktuators (25) erhalten wird.

10. Steuerverfahren nach Anspruch 9, wobei der Observer des Weiteren aus einem Term für eine a-posteriori-Schätzung (Kalman-Gain) in Abhängigkeit von dem in der Steuerperiode ($T_k$) verfügbaren gegenwärtigen Datenelement zur Korrektur der geschätzten Kurve mittels des Integrationsverfahrens besteht.

11. Steuerverfahren nach einem der vorhergehenden Ansprüche und enthaltend den weiteren Schritt des Ermittelns eines Ausgangswerts der Schätzung der Impedanz (Z) des elektrischen Aktuators (25) in einer vorläufigen Einstell- und Konstruktionsphase.

12. Steuerverfahren nach einem der vorhergehenden Ansprüche, wobei der elektrische Aktuator (25) Teil einer Hochdruck-Kraftstoffpumpe (6) eines Verbrennungsmotors (1) ist und so gesteuert wird, dass die durch die Hochdruck-Kraftstoffpumpe (6) komprimierte Kraftstoffmenge reguliert wird.

**Revendications**

1.  Procédé pour commander un actionneur électrique (25) d'un véhicule au moyen d'une commande de type PWM ; le procédé comprenant les étapes de :

    détermination d'un courant moyen objectif ($I_{m\_obj}$) à fournir à l'actionneur électrique (25) pendant une période de commande ($T_k$) ;
    détermination d'un rapport cyclique objectif (DC) qui, pendant la période de commande ($T_k$), permet la fourniture du courant moyen objectif ($I_{m\_obj}$) à l'actionneur électrique (25) conformément à une tension de commande ($V_{batt}$) et à une estimation de l'impédance (Z) de l'actionneur électrique (25) ;
    commande, pendant la période de commande ($T_k$), de l'actionneur électrique (25), par l'application de la tension de commande ($V_{batt}$) avec la rapport cyclique objectif (DC) ; et
    la mesure de la valeur réelle ($I_{real}$) du courant fourni à l'actionneur électrique (25) à un instant de mesure précis ($t_r$) déterminé dans la période de commande ($T_k$) pour chaque période de commande ($T_k$) au moyen d'un détecteur de courant ;
    le procédé de commande est **caractérisé en ce qu'**il comprend les étapes supplémentaires de :

    détermination, au même instant de mesure ($t_r$) auquel la valeur réelle ($I_{real}$) a été mesurée, d'une valeur estimée ($I_{est}$) du courant fourni à l'actionneur électrique (25) conformément à la tension de commande ($V_{batt}$), au rapport cyclique objectif (DC) et à l'estimation de l'impédance (Z) de l'actionneur électrique (25) ;
    dans lequel la valeur estimée ($I_{est}$) du courant fourni à l'actionneur électrique (25) est obtenue par sélection à partir d'un vecteur comprenant une pluralité ($N_{step}$) d'éléments qui résultent d'une estimation de la progression du courant fourni à l'actionneur électrique (25) pendant la période de commande ($T_k$) au moyen

d'un procédé d'analyse numérique appliqué à une équation d'état du circuit électrique de l'actionneur électrique (25) ; et

calcul d'un écart ($\varepsilon$) entre la valeur réelle ($I_{real}$) et la valeur estimée ($I_{est}$) du courant fourni à l'actionneur électrique (25) à l'instant de mesure ($t_r$) ; et

mise à jour de l'estimation de l'impédance (Z) de l'actionneur électrique (25) conformément à l'écart ($\varepsilon$) entre la valeur réelle ($I_{real}$) et la valeur estimée ($I_{est}$) du courant fourni à l'actionneur électrique (25) à l'instant de mesure ($t_r$).

**2.** Procédé de commande selon la revendication 1, dans lequel le procédé utilisé pour estimer le profil de courant est un procédé numérique d'intégration de la courbe, en particulier le procédé Runge-Kutta de quatrième ordre.

**3.** Procédé de commande selon la revendication 2, dans lequel le profil de courant est corrigé avec un terme représenté par le gain de Kalman.

**4.** Procédé de commande selon l'une des revendications précédentes et comprenant les étapes supplémentaires de :

détermination d'un courant moyen estimé ($I_{m\_est}$) pendant la période de commande ($T_k$) conformément à l'estimation de la progression du courant fourni à l'actionneur électrique (25) pendant la période de commande ($T_k$) ; et

utilisation du courant moyen estimé ($I_{m\_est}$) pendant la période de commande ($T_k$) en tant que rétroaction dans une commande en boucle fermée.

**5.** Procédé de commande selon la revendication 4 et comprenant les étapes supplémentaires de :

détermination d'une erreur de courant ($E_I$) pendant la période de commande ($T_k$) en calculant l'écart entre le courant moyen objectif ($I_{m\_obj}$) et le courant moyen estimé ($I_{m\_est}$) pendant la période de commande ($T_k$) ; et détermination d'une contribution en boucle fermée ($DC_{CL}$) du rapport cyclique objectif (DC) conformément à l'erreur de courant ($E_I$).

**6.** Procédé de commande selon la revendication 5 et comprenant les étapes supplémentaires de :

détermination d'une contribution en boucle ouverte ($DC_{OL}$) du rapport cyclique objectif (DC) conformément au courant moyen objectif ($I_{m\_obj}$) et à l'estimation du composant résistif de l'impédance (Z) de l'actionneur électrique (25) ;

détermination du rapport cyclique objectif (DC) en ajoutant la contribution en boucle fermée ($DC_{CL}$) à la contribution en boucle ouverte ($DC_{OL}$).

**7.** Procédé de commande selon l'une des revendications précédentes, et comprenant les étapes supplémentaires de :

calcul de l'écart type ($\varepsilon^2$) de l'écart ($\varepsilon$) entre la valeur réelle ($I_{real}$) et la valeur estimée ($I_{est}$) du courant fourni à l'actionneur électrique (25) à l'instant de mesure ($t_r$) ; et mise à jour de l'estimation de l'impédance (Z) de l'actionneur électrique (25) conformément à l'écart type ($\varepsilon^2$) de l'écart ($\varepsilon$) .

**8.** Procédé de commande selon la revendication 7, et comprenant l'étape supplémentaire de mise à jour de l'estimation de l'impédance (Z) de l'actionneur électrique (25) au moyen d'un procédé d'optimisation du type à « descente la plus raide » appliquée à l'écart type ($\varepsilon^2$) de l'écart ($\varepsilon$) .

**9.** Procédé de commande selon la revendication 8, dans lequel le procédé d'optimisation utilise un observateur consistant en un terme principal pour l'estimation de la courbe de courant dans la période de commande ($T_k$), qui est obtenue au moyen d'un procédé numérique d'intégration de l'équation d'état du circuit électrique de l'actionneur électrique (25).

**10.** Procédé de commande selon la revendication 9, dans lequel l'observateur consiste, en outre, en un terme pour une estimation a posteriori (gain de Kalman) en fonction de l'élément de données de courant disponible dans la période de commande ($T_k$) pour corriger la courbe estimée au moyen du procédé d'intégration.

**11.** Procédé de commande selon l'une des revendications précédentes et comprenant l'étape supplémentaire de détermination, dans une phase de configuration et de conception préliminaire, d'une valeur initiale de l'estimation de l'impédance (Z) de l'actionneur électrique (25).

12. Procédé de commande selon l'une des revendications précédentes, dans lequel l'actionneur électrique (25) fait partie d'une pompe à carburant haute pression (6) d'un moteur à combustion interne (1) et est commandé de manière à réguler la quantité de carburant comprimée par la pompe à carburant haute pression (6).

Fig.1

Fig.2

EP 2 354 509 B1

Fig.3

Fig.4

$I_{read}$

$I_{read}$

$I_{read}$

$t_{read}$

$t_{read}$

$t_{read}$

$T_{PWM}(T_1)$

$T_{PWM}(T_2)$

$T_{PWM}(T_3)$

$h_u = 0 \rightarrow K(t) = 0$

$\hat{i}(t+1|t) = \underbrace{a \cdot \hat{i}(t|t-1) + b \cdot V(t)}_{Eulero}$

$h_u = 1 \rightarrow K(t) = \dfrac{1}{P(t)+V_2} a \cdot P(t)$

$\hat{i}(t+1|t) = \underbrace{a \cdot \hat{i}(t|t-1) + b \cdot V(t)}_{Eulero} + \underbrace{K(t) \cdot e(t)}_{Kalman\_gain}$

$h_u = 0 \rightarrow K(t) = 0$

$\hat{i}(t+1|t) = \underbrace{a \cdot \hat{i}(t|t-1) + b \cdot V(t)}_{Eulero}$

Fig.5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1819037 A1